# EUROPEAN PATENT SPECIFICATION

(11) **EP 3 412 796 B1**
(45) Date of publication and mention of the grant of the patent: **15.09.2021**
(21) Application number: 18167157.9
(22) Date of filing: 13.04.2018
(51) Int. Cl.: C23C 24/08, B23K 35/30, B23K 35/36, B23K 35/02

(54) **FILM MATERIAL AND COLD SPRAY METHOD**
FILMMATERIAL UND KALTSPRITZVERFAHREN
MATÉRIAU DE FILM ET PROCÉDÉ DE PULVÉRISATION À FROID

(30) Priority: 08.06.2017 JP 2017113559
(43) Date of publication of application: 12.12.2018
(73) Proprietor: Tatsuta Electric Wire & Cable Co., Ltd., Higashiosaka-shi, Osaka 578-8585 (JP)
(72) Inventor: Hirano, Masaki, Japan, 6190216 (JP)
(74) Representative: Bittner, Thomas L.

(56) References cited:
- EP-A2- 1 384 545
- WO-A1-00/52228
- JP-A- 2013 220 427
- JP-A- 2014 024 104
- US-A1- 2007 029 370
- US-B1- 6 317 913

## Description

The invention refers to film material and a cold spray method.

### Background

The present invention relates to a film material for use in a cold spray device, and a cold spray method.

In the field of electronics, electrical components and electrical circuits are becoming increasingly reduced in size and weight in recent years. Accordingly, there are increasing demands such as a demand for conducting a surface treatment (surface modification) of a micro-region and a demand for forming an electrode in a micro-region.

In order to meet such demands, great attention has been paid in recent years to a method for forming a film with use of a thermal spray method. For example, a cold spray method, which is a type of thermal spray method, is a method for (1) causing a carrier gas whose temperature is lower than a melting point or a softening temperature of a film material to flow at a high speed, (2) introducing the film material into the flow of the carrier gas and then increasing the speed of the carrier gas into which the film material has been introduced, and (3) forming a film by causing the film material to collide with, for example, a base material at a high speed while the film material is in a solid phase.

A technique of forming a film with use of the cold spray method is disclosed in JP 2012-003877 A.

Document US 2007/0029370 A1 pertains to a process for preparing substrates, such as aluminum and aluminum alloy surfaces in heat exchangers, for brazing by depositing thereon a kinetic sprayed brazing composition. The process simultaneously deposits composite particles that include all braze materials, i.e., both filler alloy and brazing flux, and corrosion protection materials used in the brazing of aluminum fins to plates and tubes in a single stage.

Documents US 6,317,913 B1 and WO 00/52228 A1 disclose means for the surface preparation of a metal or metal alloy substrate. A stream of a mixture of flux particles and metal particles is hurled at the substrate at velocities effective for flux adhesion to the surface. The velocity of the particle stream is adjusted so that the flux particles adhere to the surface and the metal particles bounce off the surface. At higher temperatures and velocities, the metal particles are co-deposited with the flux.

Document EP 1 384 545 A2 relates to a method for direct application of a brazing flux material to a brazing surface. The method includes the step of applying a brazing filler material to a substrate utilizing a kinetic spray process to form a brazing surface. The application of the brazing filler material to the substrate brazing flux material can be directly applied to the brazing surface as either a dry powder or a wet slurry.

In document JP 2013 220 427 A, on the surface of an aluminum base material, a flux layer is formed by cold-spraying non-corrosive flux particles, and brazing filler material constituent particles including at least Si are caused to stick to the surface of the flux layer.

In document JP 2014 024 104 A, in a brazing filler metal with flux, fluoride-based flux particles equivalent to 5-15 % of weight of an Al-Si alloy brazing filler metal are bonded to a surface of the Al-Si alloy brazing filler metal by a cold spray.

### Summary

According to the technique disclosed in JP 2012-003877 A, an Ni layer is formed, by a cold spray method, on a surface of a belt-shaped flat conductor that is made of aluminum or an aluminum alloy. Note, however, that since Ni whose film is formed by the cold spray method has a low surface density, such an Ni film has insufficient solder wettability. As research for improving film formation efficiency, research on subjecting a base material to a pretreatment (heating, blasting, or the like) has been conducted. However, there has been hardly any research on improvement of a film material itself.

In order to solve the foregoing problem, a film material is a film material for use in a cold spray device and to be sprayed onto a base material, including: a spray material, the spray material being nickel; soldering flux powder; wherein the film material comprises the spray material and the soldering flux powder in a volume ratio ranging from 1:1 to 3:1.

Conventionally, flux has been used in order to enhance solder wettability. Usually, flux is in liquid form and sealed inside solder, and flows out of the solder when the solder is heated. Then, the flux removes an oxide that inhibits wettability of the solder. Such a solder structure has been used for years, and it is for this reason that solid flux (flux powder) has been neither in need nor under development. Due to the lack of development of flux powder, a film material containing flux powder has not been used in conventional cold spray devices and conventional cold spray methods.

The inventor of the present application paid attention to a reducing process of flux, and arrived at performing cold spray with use of a film material containing a spray material and flux powder. In a case where the film material is cold sprayed onto the base material, an oxide on a surface of the base material is removed by the flux powder, so that the surface of the base material and the spray material are joined to each other more easily. This accordingly enables both (i) an improvement in rate of adhesion of the spray material to the base material and (ii) an improvement in solder wettability.

In order to solve the foregoing problem, a cold spray method is a method including the step of: spraying a film material, together with a carrier gas, onto a base material so as to form a film on the base material, the film material containing a spray material and flux powder; wherein the carrier gas is set to a temperature of not less than 250°C and not more than 340°C; and the carrier gas is set to a pressure of not more than 1 MPa. Further, the spray material is nickel, the flux powder is soldering flux powder, and the film material comprises the spray material and the flux powder in a volume ratio ranging from 1:1 to 3:1;

According to the method, an effect similar to that of the film material can be achieved.

### Advantageous Effects of Invention

The present invention enables an improvement in rate of adhesion of a spray material to a base material.

### Description of further embodiments

Following, embodiments, by way of example, are described with reference to figures. In the figures show:
- Fig. 1: is a view schematically illustrating a cold spray device in accordance with an embodiment.
- Fig. 2: is a photograph of Ni powder.
- Fig. 3: is a photograph of soldering flux powder.
- Fig. 4: is a photograph showing how Ni powder and flux powder are mixed together with use of a mortar and a pestle.
- Fig. 5: is a photograph showing a state in which Ni powder and flux powder are mixed together.
- Fig. 6: is a photograph of a cross-section of a base material and an Ni film in Conventional Example.
- Fig. 7: is a photograph of a cross-section of a base material and an Ni film in Present Example.
- Fig. 8: is a photograph of a surface of the base material in Conventional Example.
- Fig. 9: is a photograph of a surface of the base material in Present Example.

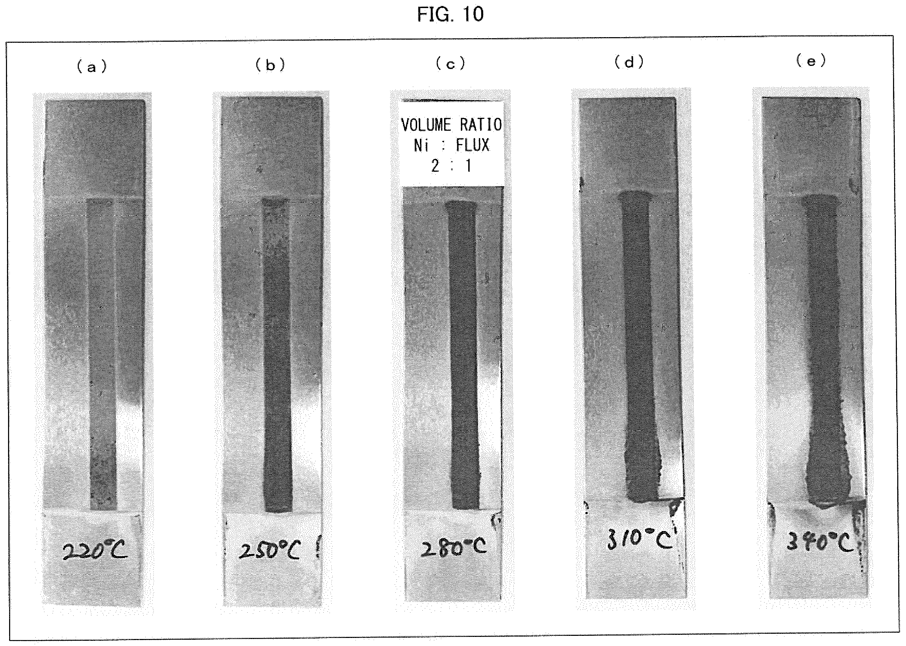

- Fig. 10: shows photographs each showing a temperature of a carrier gas and a result of film formation in Present Example. (a) of Fig. 10 shows a result of film formation in a case where the temperature of the carrier gas was 220°C. (b) of Fig. 10 shows a result of film formation in a case where the temperature of the carrier gas was 250°C. (c) of Fig. 10 shows a result of film formation in a case where the temperature of the carrier gas was 280°C. (d) of Fig. 10 shows a result of film formation in a case where the temperature of the carrier gas was 310°C. (e) of Fig. 10 shows a result of film formation in a case where the temperature of the carrier gas was 340°C.
- Fig. 11: is a view for explaining an influence of a temperature of a carrier gas on an Ni film.

Embodiments are described below with reference to the drawings. In the following description, identical components and identical constituent elements are given respective identical reference signs. Such components and constituent elements are also identical in name and function. Thus, a specific description of those components and constituent elements is not repeated.

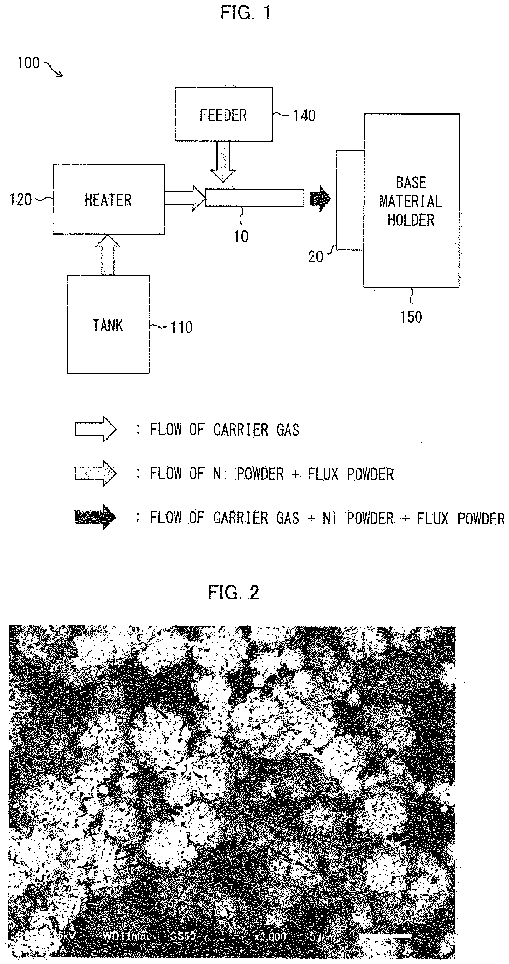

Firstly, the following description will discuss a cold spray device 100 with reference to Fig. 1.

The cold spray method is roughly classified into high-pressure cold spraying and low-pressure cold spraying, depending on working gas pressures. The cold spray device 100 can be applied to both the high-pressure cold spraying and the low-pressure cold spraying.

### [Cold spray]

In recent years, a film forming method that is called a cold spray method has been used. The cold spray method is a method for causing a carrier gas whose temperature is lower than a melting point or a softening temperature of a film material to flow at a high speed, introducing the film material into the flow of the carrier gas and then increasing the speed of the carrier gas into which the film material has been introduced, and forming a film by causing the film material to collide with, for example, a base material at a high speed while the film material is in a solid phase.

A principle of film formation by the cold spray method is understood as below.

A collision speed of not less than a certain critical value is required for a film material to adhere to and accumulate on a base material so as to form a film. Such a collision speed is referred to as a critical speed. In a case where the film material collides with the base material at a speed that is less than the critical speed, the base material is worn, so that small crater-shaped cavities are merely formed in the substrate. The critical speed is changed by, for example, a material, a size, a shape, a temperature, and/or an oxygen content of the film material, or a material of the base material.

In a case where the film material collides with the base material at a speed that is not less than the critical speed, plastic deformation caused by a great shearing force occurs near an interface between the film material and the base material (or the film which has already been formed). The plastic deformation and generation of a great shock wave in a solid due to the collision cause an increase in temperature near the interface, and in this process, solid phase bonding occurs between the film material and the base material and between the film material and the film (or the film material which has already adhered to the base material).

The cold spray device 100 uses a film material which is a mixture of a spray material and flux powder. As the spray material, Nickel

### (Cold spray device 100)

Fig. 1 is a view schematically illustrating the cold spray device 100. As illustrated in Fig. 1, the cold spray device 100 includes a tank 110, a heater 120, a spray nozzle 10, a feeder 140, a base material holder 150, and a control device (not illustrated).

The tank 110 stores therein a carrier gas. The carrier gas is supplied from the tank 110 to the heater 120. Examples of the carrier gas include nitrogen, helium, air, or a mixed gas of nitrogen, helium, and air. A pressure of the carrier gas is adjusted so that the pressure is, for example, not less than 70 PSI and not more than 150 PSI (not less than approximately 0.48 Mpa and not more than approximately 1.03 Mpa) at an exit of the tank 110. Note, however, that the pressure of the carrier gas at the exit of the tank 110 does not necessarily need to fall within the above range, and is appropriately adjusted in accordance with, for example, material(s) and/or a size of a film material, or material(s) of a base material.

The heater 120 heats the carrier gas which has been supplied from the tank 110. More specifically, the carrier gas is heated to a temperature that is lower than a melting point of the film material which is supplied from the feeder 140 to the spray nozzle 10. For example, the carrier gas which is subjected to measurement at an exit of the heater 120 is heated to a temperature in a range of not less than 50 □C and not more than 500 □C. Note, however, that a heating temperature of the carrier gas does not necessarily need to fall within the above range, and is appropriately adjusted in accordance with, for example, the material(s) and/or the size of the film material, or the material(s) of the base material.

The carrier gas is heated by the heater 120 and then is supplied to the spray nozzle 10.

The spray nozzle 10 (i) causes an increase in speed of the carrier gas which has been heated by the heater 120 to a speed in a range of not less than 300 m/s and not more than 1200 m/s and (ii) causes the carrier gas to be sprayed therethrough onto a base material 20. Note, however, that the speed of the carrier gas does not necessarily need to fall within the above range, and is appropriately adjusted in accordance with, for example, the material(s) and/or the size of the film material, or the material(s) of the base material.

The feeder 140 supplies the spray material and the flux powder to the flow of the carrier gas whose speed is increased by the spray nozzle 10. The spray material which is supplied from the feeder 140 has a particle size of, for example, not less than 1 µm and not more than 50 µm. Together with the carrier gas, the spray material and the flux powder which have been supplied from the feeder 140 are sprayed through the spray nozzle 10 onto the base material 20.

The base material holder 150 fixes the base material 20. Onto the base material 20 which has been fixed by the base material holder 150, the carrier gas, the spray material, and the flux powder are sprayed through the spray nozzle 10. A distance between a surface of the base material 20 and a tip of the spray nozzle 10 is adjusted so that the distance falls within a range of, for example, not less than 1 mm and not more than 30 mm. In a case where the distance between the surface of the base material 20 and the tip of the spray nozzle 10 is less than 1 mm, a film formation speed is decreased. This is because the carrier gas sprayed from the spray nozzle 10 flows back into the spray nozzle 10. At this time, a pressure generated when the carrier gas flows back may cause a member (e.g., a hose) connected to the spray nozzle 10 to be detached. Meanwhile, in a case where the distance between the surface of the base material 20 and the tip of the spray nozzle 10 is more than 30 mm, efficiency in film formation is decreased. This is because it becomes more difficult for the carrier gas and the film material which have been sprayed from the spray nozzle 10 to reach the base material 20.

Note, however, that the distance between the surface of the base material 20 and the tip of the spray nozzle 10 does not necessarily need to fall within the above range, and is appropriately adjusted in accordance with, for example, the material(s) and/or the size of the film material, or the material(s) of the base material.

The control device controls the cold spray device 100 in accordance with information stored therein in advance and/or an input by an operator. Specifically, the control device controls, for example, (i) the pressure of the carrier gas which is supplied from the tank 110 to the heater 120, (ii) the temperature of the carrier gas which is heated by the heater 120, (iii) a kind and an amount of the film material which is supplied from the feeder 140, and (iv) the distance between the surface of the base material 20 and the spray nozzle 10.

### [Flux]

The following description will discuss soldering flux. Conventionally, soldering flux is used in soldering, for purposes such as (1) removing an oxide and the like which inhibits solder wettability, (2) blocking off air so as to prevent reoxidation caused by heating, and (3) decreasing a surface tension of solder so as to enhance wettability of the solder. Examples of a flux material include an inorganic substance (an inorganic acid, an inorganic salt, or the like), an organic substance (an organic acid, a halide salt of organic amine, or the like), and a resin (rosin, denatured rosin, a synthetic resin, or the like). Conventionally, liquid flux is sealed in rod solder or wire solder. In the cold spray device 100, solid flux powder is used instead of liquid flux.

Specific examples of the flux material are as follows. As an organic acid, a compound typified by aliphatic carboxylic acid or aromatic carboxylic acid is added. Any one of formic acid, acetic acid, propionic acid, butyric acid, valeric acid, caproic acid, enanthic acid, caprylic acid, pelargonic acid, capric acid, lauric acid, myristic acid, palmitic acid, stearic acid, arachidic acid, behenic acid, oxalic acid, malonic acid, succinic acid, phenylsuccinic acid, glutaric acid, adipic acid, pimelic acid, suberic acid, azelaic acid, sebacic acid, fumaric acid, maleic acid, tartaric acid, malic acid, levulinic acid, lactic acid, acrylic acid, benzoic acid, salicylic acid, anisic acid, citric acid, glycolic acid, diglycolic acid, hydroxypropionic acid, dihydroxypropionic acid, hydroxybutyric acid, dihydroxybutyric acid, hydroxyvaleric acid, dihydroxyvaleric acid, hydroxycaproic acid, dihydroxycaproic acid, hydroxyenanthic acid, dihydroxyenanthic acid, hydroxycaprylic acid, dihydroxycaprylic acid, hydroxypelargonic acid, dihydroxypelargonic acid, hydroxycapric acid, dihydroxycapric acid, hydroxylauric acid, dihydroxylauric acid, hydroxymyristic acid, dihydroxymyristic acid, hydroxypalmitic acid, dihydroxypalmitic acid, hydroxystearic acid, hydroxyarachidic acid, dihydroxyarachidic acid, hydroxybehenic acid, dihydroxybehenic acid, hydroxymethylpropionic acid, dihydroxymethylpropionic acid, hydroxymethylbutyric acid, dihydroxymethylbutyric acid, hydroxymethylvaleric acid, dihydroxymethylvaleric acid, hydroxymethylcaproic acid, dihydroxymethylcaproic acid, hydroxymethylenanthic acid, dihydroxymethylenanthic acid, hydroxymethylcaprylic acid, dihydroxymethylcaprylic acid, hydroxymethylpelargonic acid, dihydroxymethylpelargonic acid, hydroxymethylcapric acid, dihydroxymethylcapric acid, hydroxymethyllauric acid, dihydroxymethyllauric acid, hydroxymethylmyristic acid, dihydroxymethylmyristic acid, hydroxymethylpalmitic acid, dihydroxymethylpalmitic acid, hydroxymethylstearic acid, hydroxymethylarachidic acid, dihydroxymethylarachidic acid, hydroxymethylbehenic acid, and dihydroxymethylbehenic acid; or a combination of a plurality of these organic acids is added.

As described above, the cold spray device 100 uses the film material containing the spray material and the flux powder. As the spray material, Ni is used. Note that, in the following description, the spray material is Ni powder, and the flux powder is soldering flux powder. Further, in the following description, powder which is a mixture of the Ni powder and the flux powder may be simply referred to as a film material.

### [Method for preparing film material]

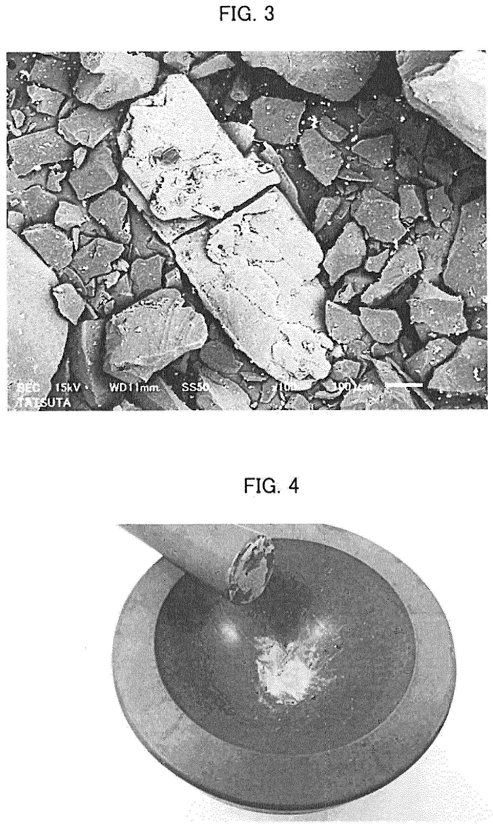

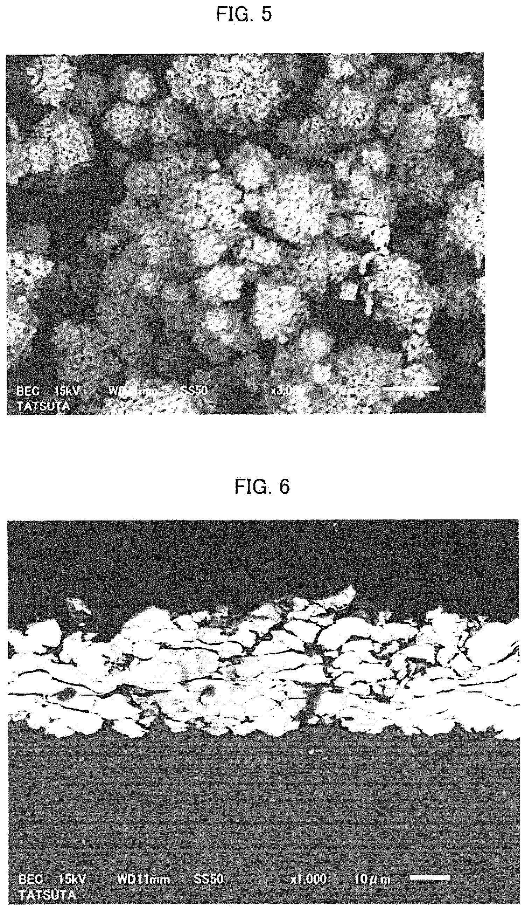

The following description will discuss a method for preparing the film material, with reference to Fig. 2 etc. Fig. 2 is a photograph of Ni powder. Fig. 3 is a photograph of soldering flux powder. Fig. 4 is a photograph showing how the Ni powder and the flux powder are mixed together with use of a mortar and a pestle. Fig. 5 is a photograph showing a state in which the Ni powder and the flux powder are mixed together.

In Fig. 2, each particle of the Ni powder has a shape with a sharp-pointed portion (has a spiky shape), and an average particle size of the Ni powder is approximately 7 µm. In Fig. 3, particles of the flux powder vary in size and shape. Thus, the Ni powder and the flux powder differ from each other in particle shape and particle size. As such, in order to achieve more homogenous mixture of the Ni powder and the flux powder, the mortar and the pestle are used (Fig. 4). A state in which the Ni powder and the flux powder have been mixed with use of the mortar and the pestle is shown in Fig. 5. As shown in Fig. 5, the particles of the Ni powder and the particles of the flux powder have become homogeneous and have less variation in size. Further, the flux powder, which has been crushed with use of the pestle, is adhering to the Ni powder.

A mixing ratio of the Ni powder and the flux powder is 1:1 to 3:1 in terms of volume ratio. The inventor of the present invention has found that (1) both an excessively high mixing ratio and an excessively low mixing ratio of the flux powder cause a decrease in amount of Ni which adheres to the base material 20, and (2) the mixing ratio of the Ni powder and the flux powder therefore ranges from 1:1 to 3:1. This is because (i) less Ni powder results in a decrease in film formation ratio and (ii) less flux powder results in weakening of an oxide removal effect on the surface of the base material and accordingly results in a decrease in film formation ratio.

### [Example]

The following description will discuss an Example. Conditions employed are as follows. For easy understanding, the following description will make a comparison between a case in which a film material contains a spray material and flux powder (hereinafter referred to as "Present Example") and a case in which a film material only contains Ni powder (hereinafter referred to as "Conventional Example").
1. Film material: (1) Ni powder, (2) Ni powder + flux powder (in a volume ratio of 2:1)
2. Spray nozzle 10: cylindrical shape (diameter: 5 mm)
3. Pressure of carrier gas: 0.9 MPa
4. Temperature of carrier gas: 340°C
5. Amount of film material supplied: 15 g/min
6. Film width: 10 mm
7. Gun speed: 10 Mm/sec
8. Base material 20: aluminum base material
9. Flux powder: soldering flux powder

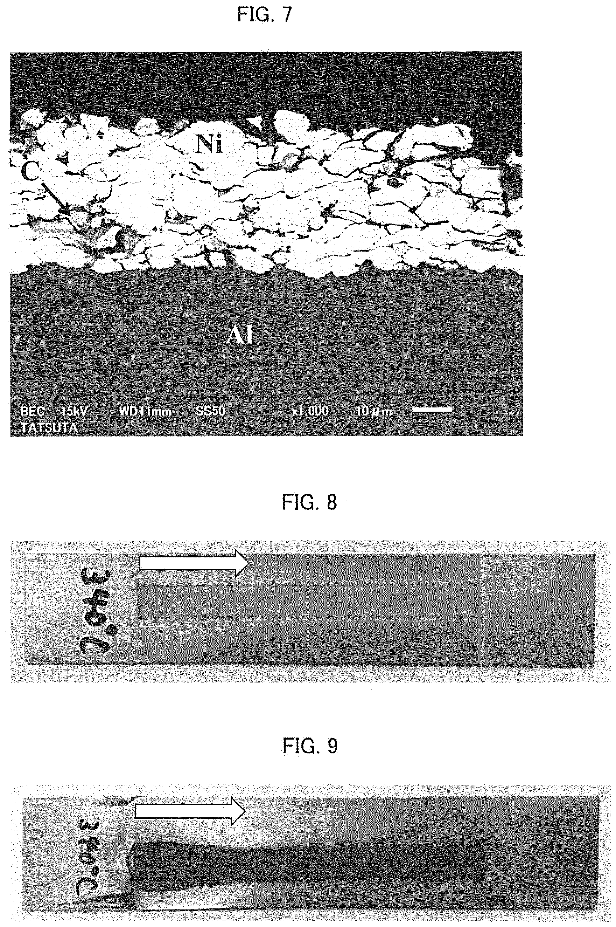

The following description will discuss, with reference to Fig. 6 etc., how a state of film formation of an Ni film in Present Example differs from a state of film formation of an Ni film in Conventional Example. Fig. 6 is a photograph of a cross-section of the base material and the Ni film in Conventional Example. Fig. 7 is a photograph of a cross-section of the base material and the Ni film in Present Example.

As known from Figs. 6 and 7, the Ni film in Present Example has a film thickness greater than that of the Ni film in Conventional Example. That is, a greater amount of Ni adheres to the base material in Present Example as compared with Conventional Example. This is for the following reason. Specifically, flux undergoes a reducing process. Accordingly, the flux powder which has adhered to the Ni powder removes an oxide on the surface of the base material, so that Ni is easily joined to the base material, which is made of aluminum. This is why the amount of Ni which adheres to the base material is greater in Present Example than that in Conventional Example.

Next, the following description will compare Present Example and Conventional Example with reference to other drawings. Fig. 8 is a photograph of a surface of the base material in Conventional Example. Fig. 9 is a photograph of a surface of the base material in Present Example. Both in Fig. 8 and Fig. 9, the temperature of the carrier gas is set to 340 C. In Conventional Example, Ni hardly adheres to the base material (Fig. 8). In contrast, in Present Example, Ni homogenously adheres to the base material (Fig. 9).

Then, an influence of the temperature of the carrier gas on the Ni film in Present Example was examined. Results are shown in Fig. 10. Fig. 10 shows photographs each showing a temperature of the carrier gas and a result of film formation in Present Example, (a) of Fig. 10 shows a result of film formation in a case where the temperature of the carrier gas was 220°C. (b) of Fig. 10 shows a result of film formation in a case where the temperature of the carrier gas was 250°C. (c) of Fig. 10 shows a result of film formation in a case where the temperature of the carrier gas was 280°C. (d) of Fig. 10 shows a result of film formation in a case where the temperature of the carrier gas was 310°C. (e) of Fig. 10 shows a result of film formation in a case where the temperature of the carrier gas was 340°C.

As shown in Fig. 9, the amount of Ni which adhered to the base material was small in the case where the temperature of the carrier gas was 220°C. However, in the cases where the temperature of the carrier gas was 250°C to 340°C, respectively, the amount of Ni which adhered to the base material increased. Specifically, in the case where the temperature of the carrier gas was 250°C, the amount of Ni which adhered to the base material noticeably increased as compared with Conventional Example, although Ni did not adhere to the base material homogenously. Further, in the cases where the temperature of the carrier gas was 310°C and 340°C, respectively, the amount of Ni which adhered to the base material noticeably increased as compared with Conventional Example. Note, however, that in a case where the temperature of the carrier gas increases, the flux powder turns into a liquid form, and is sprayed in a melted state through the spray nozzle. This prevents optimum spray of the Ni powder through the spray nozzle onto the base material. This may cause a decrease in efficiency of adhesion.

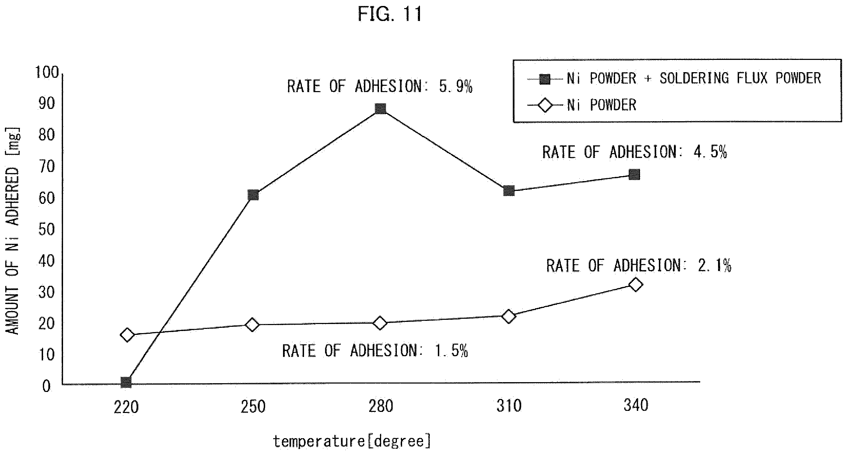

Subsequently, in Present Example and Conventional Example, an influence of the temperature of the carrier gas on the Ni film was examined. Results are shown in Fig. 11. Fig. 11 is a view for explaining an influence of the temperature of the carrier gas on the Ni film. In a graph of Fig. 11, a horizontal axis represents a temperature of the carrier gas, and a vertical axis represents an adhesion amount (mg) of Ni, that is, an amount of Ni which adhered to the base material. The cold spray device 100 was operated for one minute, and an amount of the film material supplied was 15 g/min. Accordingly, rates of adhesion in the graph each represents a ratio calculated by dividing an adhesion amount (mg) by 15 g.

Firstly, results of film formation in Conventional Example are discussed. In Conventional Example, the amount of Ni which adhered to the base material increased, although slightly, in accordance with an increase in temperature of the carrier gas. However, in a case where the temperature of the carrier gas was 340°C, the rate of adhesion was small (approximately 2.1%), and many irregularities were observed on a film surface.

In Present Example, when the temperature of the carrier gas was 220°C, little reduction reaction was caused by the flux, and adhesion of Ni to the base material did not progress due to inhibition by the flux powder. However, as the temperature of the carrier gas approached 250°C, a reduction reaction by the flux started, so that Ni started to adhere to the base material. When the temperature of the carrier gas was 280°C, the Ni film had a maximum film thickness. At this time, the rate of adhesion of Ni to the base material had a maximum value of 5.9%, which was four times the rate of adhesion of Ni to the base material in Conventional Example. When the temperature of the carrier gas exceeded 310°C, the flux turned into a liquid form, and the film spread beyond the width of the spray nozzle. The same was true when the temperature of the carrier gas was 340°C. Nevertheless, when the temperature of the carrier gas was 340°C, the rate of adhesion was 4.5%, which is double the rate of adhesion in Conventional Example.

Thus, in each of Present Example and Conventional Example, the temperature of the carrier gas had a significant influence on a state of Ni film formation. Note, however, that the rate of adhesion of Ni to the base material was greater in Present Example than that in Conventional Example. Further, in Present Example, the rate of adhesion of Ni to the base material increased particularly in a case where the carrier gas was in a temperature range of not less than 250°C and not more than 340°C. A reason for this is that, in this temperature range of the carrier gas, (i) flux undergoes a reducing process and (ii) negative influence from liquefaction of the flux powder is small.

In the description above, an example case was discussed in which the soldering flux powder was used as the flux powder. Note, however, that silver soldering flux powder can also be used as the flux powder in the cold spray device 100. In this case, since the silver soldering flux powder differs in composition from soldering flux powder, conditions under which the cold spray device 100 is operated (e.g., a temperature of the carrier gas) can be changed as appropriate in order to increase the amount of the spray material which adheres to the base material.

Further, although the description above dealt with an example case in which the Ni powder was used as the spray material, it is possible to use a material other than Ni (e.g., Sn or the like) as the spray material in the cold spray device 100. In this case, in order to increase the amount of the spray material which adheres to the base material, conditions under which the cold spray device 100 is operated (e.g., a temperature of the carrier gas) can be changed as appropriate.

Further, the film material containing the spray material and the flux powder can be used not only in a low-pressure cold spray device which uses a carrier gas having a pressure of not more than 1 MPa, but also in a high-pressure cold spray device which uses a carrier gas having a pressure of not less than 1 MPa. Note, however, that currently, a rate of adhesion of the spray material to the base material in the low-pressure cold spray device is lower than that in the high-pressure cold spray device. Accordingly, using the film material containing the spray material and the flux powder in the low-pressure cold spray device rather than in the high-pressure cold spray device is likely to provide a greater improvement in rate of adhesion of the spray material to the base material.

### [Recap]

A film material in accordance with Aspect 1 of the present invention is a film material for use in a cold spray device and to be sprayed onto a base material, including: a spray material; and flux powder.

Conventionally, flux has been used in order to enhance solder wettability. Usually, flux is in liquid form and sealed inside solder, and flows out of the solder when the solder is heated. Then, the flux removes an oxide that inhibits wettability of the solder. Such a solder structure has been used for years, and it is for this reason that solid flux (flux powder) has been neither in need nor under development. Due to the lack of development of flux powder, a film material containing flux powder has not been used in conventional cold spray devices and conventional cold spray methods.

The inventor of the present application paid attention to a reducing process of flux, and arrived at performing cold spray with use of a film material containing a spray material and flux powder. In a case where the film material is cold sprayed onto the base material, an oxide on a surface of the base material is removed by the flux powder, so that the surface of the base material and the spray material are joined to each other more easily. This accordingly enables both (i) an improvement in rate of adhesion of the spray material to the base material and (ii) an improvement in solder wettability.

In Aspect 2 of the present invention, the film material in accordance with Aspect 1 is configured such that: the spray material is nickel; the flux powder is soldering flux powder; and the film material includes the spray material and the flux powder in a volume ratio ranging from 1:1 to 3:1.

According to the configuration above, a rate of adhesion of nickel to the base material can be improved as compared with a case in which a film material used in a cold spray device contains only nickel powder.

A cold spray method in accordance with Aspect 3 of the present invention is a cold spray method including the step of: spraying a film material, together with a carrier gas, onto a base material so as to form a film on the base material, the film material containing a spray material and flux powder.

According to the method, an effect similar to that of the film material can be achieved.

In Aspect 4 of the present invention, the cold spray method in accordance with Aspect 3 can be configured such that the carrier gas is set to a temperature of not less than 250°C and not more than 340°C.

According to the configuration above, a rate of adhesion of nickel to the base material can be improved as compared with a case in which a film material used in a cold spray device contains only nickel powder.

In Aspect 5 of the present invention, the cold spray method in accordance with Aspect 3 or 4 can be configured such that the carrier gas is set to a pressure of not more than 1 Mpa.

In a case of a low-pressure cold spray device which employs a carrier gas having a pressure of not more than 1 Mpa, a rate of adhesion of the spray material to the base material can be improved particularly well.

The present invention is not limited to the embodiments, but can be altered by a skilled person in the art within the scope of the claims. The present invention also encompasses, in its technical scope, any embodiment derived by combining technical means disclosed in differing embodiments.

The features disclosed in this specification, the figures and / or the claims may be material for the realization of various embodiments, taken in isolation or in various combinations thereof.

### Reference list

- 10: spray nozzle
- 20: base material
- 100: cold spray device
- 110: tank
- 120: heater
- 140: feeder
- 150: base material holder

## Claims

1. A film material for use in a cold spray device and to be sprayed onto a base material, comprising:
- a spray material, the spray material being nickel;
- flux powder, the flux powder being soldering flux powder;
wherein the film material comprises the spray material and the flux powder in a volume ratio ranging from 1:1 to 3:1.

2. A cold spray method comprising the step of: spraying a film material, together with a carrier gas, onto a base material so as to form a film on the base material, the film material containing a spray material and flux powder;
wherein
- the spray material is nickel;
- the flux powder is soldering flux powder;
- the film material comprises the spray material and the flux powder in a volume ratio ranging from 1:1 to 3:1;
- the carrier gas is set to a temperature of not less than 250°C and not more than 340°C; and
- the carrier gas is set to a pressure of not more than 1 MPa.

## Patentansprüche

1. Filmmaterial zur Verwendung in einer Kaltgasspritzvorrichtung und zum Spritzen auf ein Basismaterial, das umfasst:
- ein Spritzmaterial, wobei das Spritzmaterial Nickel ist;
- Flusspulver, wobei das Flusspulver Löt-Flusspulver ist;
wobei das Filmmaterial das Spritzmaterial und das Flusspulver in einem Volumenverhältnis von 1:1 bis 3:1 umfasst.

2. Kaltgasspritzverfahren, das den Schritt umfasst: Spritzen eines Filmmaterials gemeinsam mit einem Trägergas auf ein Basismaterial, um einen Film auf dem Basismaterial zu bilden, wobei das Filmmaterial ein Spritzmaterial und Flusspulver enthält;
wobei
- das Spritzmaterial Nickel ist;
- das Flusspulver Löt-Flusspulver ist;
- das Filmmaterial das Spritzmaterial und das Flusspulver in einem Volumenverhältnis von 1:1 bis 3:1 umfasst;
- das Trägergas auf eine Temperatur von nicht weniger als 250 °C und nicht mehr als 340 °C eingestellt ist; und
- das Trägergas auf einen Druck von nicht mehr als 1 MPa eingestellt ist.

## Revendications

1. Matériau de film à utiliser dans un dispositif de pulvérisation à froid et à pulvériser sur un matériau de base, comprenant :
- un matériau de pulvérisation, le matériau de pulvérisation étant du nickel;
- une poudre de flux, la poudre de flux étant une poudre de flux de soudure;
dans lequel le matériau de film comprend le matériau de pulvérisation et la poudre de flux dans un rapport volumique allant de 1:1 à 3:1.

2. Procédé de pulvérisation à froid comprenant l'étape consistant à: pulvériser un matériau de film, conjointement à un gaz porteur, sur un matériau de base de manière à former un film sur le matériau de base, le matériau de film contenant un matériau de pulvérisation et une poudre de flux ;
dans lequel
- le matériau de pulvérisation est du nickel;
- la poudre de flux est une poudre de flux de soudure;
- le matériau de film comprend le matériau de pulvérisation et la poudre de flux dans un rapport volumique allant de 1:1 à 3:1;
- le gaz porteur est réglé à une température non inférieure à 250 °C et non supérieure à 340 °C; et
- le gaz porteur est réglé à une pression ne dépassant pas 1 MPa.
